# EUROPEAN PATENT APPLICATION

(11) **EP 1 944 480 A1**
(43) Date of publication of application: **16.07.2008**
(21) Application number: 08000064.9
(22) Date of filing: 03.01.2008
(51) Int. Cl.: F01N 3/28, F01N 7/08, F01N 7/18, B60K 13/04

(54) **Vehicle exhaust system structure**

(30) Priority: 09.01.2007 JP 2007001581
(71) Applicant: TOYOTA JIDOSHA KABUSHIKI KAISHA, Aichi-ken, 471-8571 (JP)
(72) Inventor: Mabuchi, Tomoki, Toyota-shi Aichi-ken 471-8571 (JP); Nishino, Hisashi, Toyota-shi Aichi-ken 471-8571 (JP)
(74) Representative: Kuhnen & Wacker

(57) **Abstract**

A vehicle exhaust system structure is obtained which can protect well a bend portion of an exhaust pipe. A vehicle exhaust system structure 10 is intended to discharge exhaust gases of a front-engine front-drive vehicle with a transverse engine from a rear part of a vehicle body and is applied to an exhaust system 11 which is configured such that a first catalytic converter 12, a second catalytic converter 14, an exhaust system heat exchanger 15 and a muffler 16 are disposed sequentially in that order from an upstream side in an exhaust gas flow direction. In the exhaust system 11, a heat exchanger to muffler exhaust pipe 26 which connects the exhaust system heat exchanger 15 to the muffler 16 has an inclined portion 26A, and a portion of the exhaust system 11 which lies further rearwards than the exhaust system heat exchanger 15 is suspended from the vehicle body by a suspension unit 80. Provided on a catalytic converter to heat exchanger exhaust pipe 24 which connects the second catalytic converter 14 to the exhaust system heat exchanger 15 is a ball joint 96 which permits a relative displacement between the second catalytic converter 14 and the exhaust system heat exchanger 15.

## Description

### BACKGROUND OF THE INVENTION

### Field of the Invention

The present invention relates to a vehicle exhaust system structure for an internal combustion engine which is installed transversely in a front part of a vehicle body of, for example, a front-engine front-drive vehicle, and more particularly to a vehicle exhaust system structure which includes an exhaust heat recovery unit for recovering exhaust heat.

### Description of the Related Art

As is disclosed in, for example, Japanese Patent Application Laid-Open (JP-A) Nos. 10-196358 and 2004-190610, in an exhaust system which is connected to a transverse internal combustion engine and in which a catalytic converter, a sub-muffler and a main muffler are disposed directly in that order from an upstream side of an exhaust gas flow direction, there is known a structure in which a bend portion is provided in an exhaust pipe which connects the sub-muffler to the main muffler and ball joints are provided, respectively, upstream of the catalytic converter in the exhaust gas flow direction and directly upstream of the main muffler in the exhaust gas flow direction.

In the above-mentioned related art, however, it is feared that a large magnitude of force is applied to the bend portion of the exhaust pipe when an exhaust heat recovery unit of large mass is provided along the exhaust system, and there has still been room for improvement in this area.

### SUMMARY OF THE INVENTION

The present invention has been made in view of the above circumstances and provides a vehicle exhaust system structure.

A first aspect of the present invention provides a vehicle exhaust system structure for discharging exhaust gases of an internal combustion engine, which is transversely installed in a front part of a vehicle body, from a rear part of the vehicle body, the vehicle exhaust system structure comprising: a first catalytic device, a second catalytic device, an exhaust heat recovery unit and a silencer which are disposed sequentially in that order from an upstream side in an exhaust gas flow direction; a first exhaust pipe which connects the second catalytic device to the exhaust heat recovery unit; a second exhaust pipe which includes a portion extending in a direction intersecting a vehicle front-rear direction, and which connects the exhaust heat recovery unit, which is disposed to be offset in a vehicle width direction, to the silencer; a suspension unit which suspends at least part of the exhaust system elements including the exhaust heat recovery unit, the second exhaust pipe, and the silencer, relative to the vehicle body, on a downstream side in an exhaust gas flow direction relative to the first exhaust pipe; and a vibration cut-off mechanism which is provided at the first exhaust pipe and permits a relative displacement between the second catalytic device and the exhaust heat recovery unit.

A second aspect of the present invention provides a vehicle exhaust system structure for discharging exhaust gases of an internal combustion engine, which is transversely installed in a front part of a vehicle body, from a rear part of the vehicle body, the vehicle exhaust system structure comprising: a first catalytic device, a second catalytic device, an exhaust heat recovery unit and a silencer which are disposed sequentially in that order from an upstream side in an exhaust gas flow direction; an exhaust pipe which includes a portion extending in a direction intersecting a vehicle front-rear direction, and which connects the exhaust heat recovery unit, which is disposed to be offset in a vehicle width direction, to the silencer; a vibration cut-off mechanism which permits a relative displacement between the first catalytic device and the second catalytic device, or a relative displacement between the second catalytic device and the exhaust heat recovery unit; and a suspension unit which includes a supported member which is fixed to a low-rigidity portion of the exhaust heat recovery unit and a support member which supports the supported member on the vehicle body.

### BRIEF DESCRIPTION OF THE DRAWINGS

Embodiments of the present invention will be described in detail based on the following figures, wherein:
Fig. 1 is a plan view of an exhaust system to which a vehicle exhaust system structure according to an embodiment of the present invention is applied;
Fig. 2 is a side view of the exhaust system to which the vehicle exhaust system structure according to the embodiment of the present invention is applied;
Fig. 3 is a plan view of an exhaust system heat exchanger which makes up the vehicle exhaust system structure according to the embodiment of the present invention;
Fig. 4 is a cross-sectional side view which shows a valve device which makes up the vehicle exhaust system structure according to the embodiment of the present invention;
Fig. 5A is a cross-sectional plan view which shows a ball joint which makes up the vehicle exhaust system structure according to the embodiment of the present invention;
Fig. 5B is a side view which shows the ball joint which makes up the vehicle exhaust system structure according to the embodiment of the present invention;
Fig. 6A is a plan view which shows a state in which the exhaust system to which the vehicle exhaust system structure according to the embodiment of the present invention is applied vibrates with a specific frequency;
Fig. 6B is a side view which shows the state in which the exhaust system to which the vehicle exhaust system structure according to the embodiment of the present invention is applied vibrates with the specific frequency;
Fig. 7A is a plan view which shows a state in which the exhaust system to which the vehicle exhaust system structure according to the embodiment of the present invention is applied vibrates with one other specific frequency; and
Fig. 7B is a side view which shows the state in which the exhaust system to which the vehicle exhaust system structure according to the embodiment of the present invention is applied vibrates with the one other specific frequency.

### DETAILED DESCRIPTION OF THE INVENTION

Hereinbelow, an example of an exemplary embodiment of the present invention will be described in detail with reference to the drawings.

Firstly, an overall configuration of an exhaust system 11 to which a vehicle exhaust system structure 10 is applied will be schematically described, next, an exhaust system heat exchanger 15 which makes up the vehicle exhaust system structure 10 will be described, and thereafter, a support structure of the exhaust system 11 relative to a vehicle body will be described which constitutes a main part of the present invention in the vehicle exhaust system structure 10. Note that in the following description, when such words as upstream and downstream are simply used, they are to denote upstream and downstream of an exhaust gas flow direction. In addition, an arrow FR, arrow UP and arrow W which are shown in the respective drawings are to denote, respectively, front side (running direction) in a vehicle front-rear direction, upper side in a vehicle vertical direction, and a vehicle width direction, of a motor vehicle to which the vehicle exhaust system structure 10 is applied.

### (Overall Configuration)

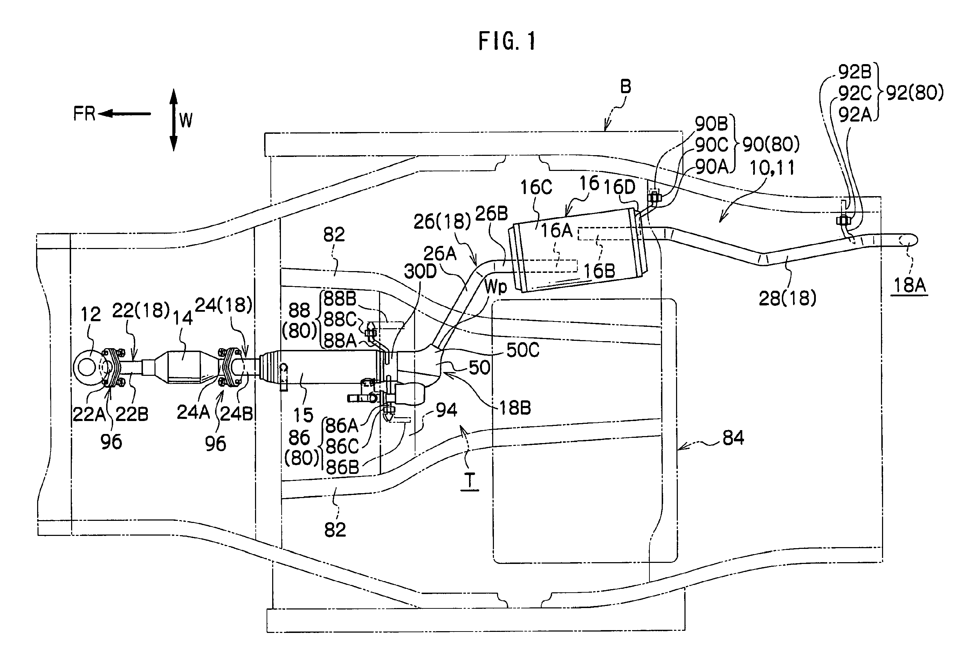

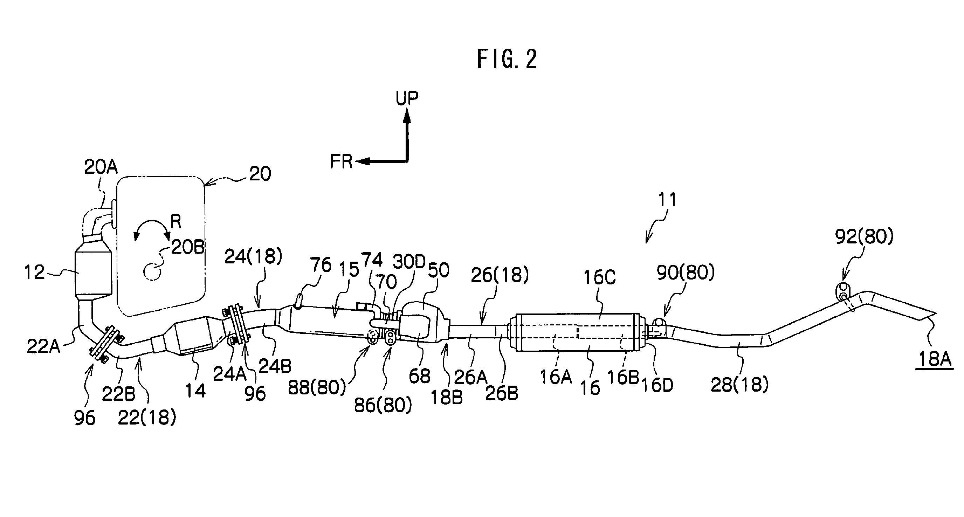

Fig. 1 schematically shows an overall configuration of the vehicle exhaust system structure 10 in plan view, and Fig. 2 shows the vehicle exhaust system structure 10 in side view. As is shown in these figures, the exhaust system 11 to which the vehicle exhaust system structure 10 is applied such that it forms an exhaust gas flow path, and a first catalytic converter 12 as a first catalytic device, a second catalytic converter 14 as a second catalytic device, for purifying exhaust gases, an exhaust system heat exchanger 15 as an exhaust heat recovery unit for recovering heat entrained by exhaust gases, in order to promote engine warm-up and maintain heating, and a muffler 16 for reducing (silencing) exhaust noise, are provided sequentially in that order from an upstream side, and these devices are made to communicate in series with each other by an exhaust pipe 18.

More specifically, the first catalytic converter 12 is, as is shown in Fig. 2, directly coupled to an exhaust manifold 20A of an engine 20, which is an internal combustion engine. The engine 20 is of a transverse type in which an axial direction of a crankshaft 20B coincides substantially with the vehicle width direction and is installed in a front part of a vehicle body. In this embodiment, the engine 20 is applied to a front-wheel drive vehicle (front-engine front-drive vehicle) or a four-wheel drive vehicle based on a front-wheel drive vehicle, and is configured to impart driving force to at least front wheels, not shown. In addition, as is shown in Figs. 1 and 2, the first catalytic converter 12 and the second catalytic converter 14 are connected to (made to communicate with) each other via an inter-catalytic converter exhaust pipe 22 which makes up a furthest upstream portion of the exhaust pipe 18. The second catalytic converter 14 and the exhaust system heat exchanger 15 are connected to (made to communicate with) each other via a catalytic converter to heat exchanger exhaust pipe 24 as a first exhaust pipe which makes up an upstream portion of the exhaust pipe 18.

Furthermore, the exhaust system heat exchanger 15 and the muffler 16 are connected to each other via a heat exchanger to muffler exhaust pipe 26 as a second exhaust pipe (exhaust pipe) which makes up an intermediate portion of the exhaust pipe 18. The heat exchanger to muffler exhaust pipe 26 is connected to a muffler inlet pipe 16A of the muffler 16. In addition, a muffler outlet pipe 16B of the muffler 16 is connected to an upstream end of a downstream side exhaust pipe 28, which makes up a downstream portion of the exhaust pipe 18. The downstream side exhaust pipe 28, that is, a downstream end of the exhaust pipe 18 is made to constitute an atmosphere release portion 18A from which exhaust gases that have been purified by the catalytic converters 12, 14 are discharged to the atmosphere.

As a result of the configuration of the exhaust system 11 described above, exhaust gases discharged from the exhaust manifold 20A of the engine 20 which is situated in the front part of the vehicle body flows sequentially through the first catalytic converter 12, the inter-catalytic converter exhaust pipe 22, the second catalytic converter 14, the catalytic converter to heat exchanger exhaust pipe 24, the exhaust system heat exchanger 15, the heat exchanger to muffler exhaust pipe 26, the muffler 16 and the downstream side exhaust pipe 28 in that order and is discharged to the atmosphere from the atmosphere release portion 18A which is situated in the rear end portion of the vehicle body.

### (Configuration of Exhaust System Heat Exchanger)

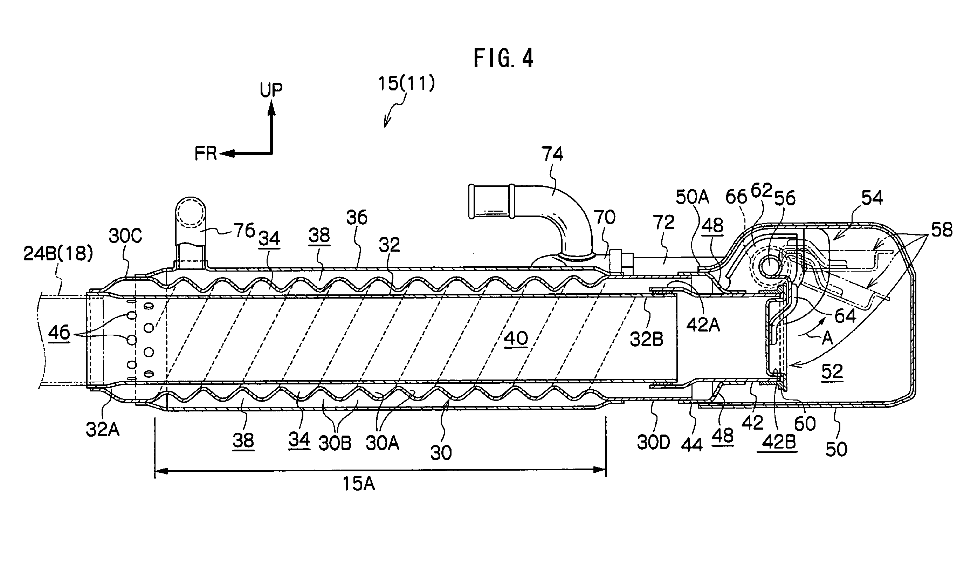

The exhaust system heat exchanger 15 is configured to recover heat entrained by exhaust gases to an engine cooling water as a cooling medium and includes, as is shown in Fig. 4, a partition wall pipe 30 which isolates a flow path of the exhaust gases from a flow path of the engine cooling water. In this embodiment, the partition wall pipe 30 has spiral grooves 30A, 30B which are spirally formed on internal and external surfaces of a pipe wall thereof. The spiral grooves 30A, 30B are formed along almost the full length of a heat exchange portion 15A where heat exchange is implemented between the exhaust gases and the engine cooling water, and the front and rear of the partition wall pipe 30 are made to constitute, respectively, an exhaust gas introduction portion 30C and an exhaust gas exhaust portion 30D which extend forwards and rearwards relative to the heat exchange portion 15A.

An inner pipe 32, which functions as a bypass pipe portion formed substantially into a cylindrical shape, is disposed coaxially inside the partition wall pipe 30. A space defined between the partition wall pipe 30 and the inner pipe 32 is made to constitute an exhaust gas flow path 34 of the exhaust system heat exchanger 15. In addition, the partition wall pipe 30 is covered from an outer peripheral side with an outer pipe 36 which is formed substantially into a cylindrical shape and is disposed coaxially. A space defined between the partition wall pipe 30 and the outer pipe 36 is made to constitute an engine cooling water flow path 38 of the exhaust system heat exchanger 15.

In the exhaust system heat exchanger 15, a range where the engine cooling water flow path 38 is formed in the exhaust gas flow direction is made to constitute the heat exchange portion 15A where heat exchange is implemented between exhaust gases and engine cooling water, and the inner pipe 32 protrudes further upstream and downstream than the heat exchange portion 15A. A space within the inner pipe 32 in this exhaust system heat exchanger 15 is made to constitute a bypass flow path 40 as an upstream gas flow path for bypassing the heat exchange portion 15A in the exhaust system heat exchanger 15.

More specifically, as is shown in Fig. 4, a downstream end of the catalytic converter to heat exchanger exhaust pipe 24 is connected to an upstream end 32A of the inner pipe 32, and a downstream end 32B of the inner pipe 32 is connected almost coaxially to an upstream end 42A of an exhaust gas guide pipe 42. Note that in place of the exhaust gas guide pipe 42, the inner pipe 32 may be extended towards the downstream side. In addition, a front end of the exhaust gas introduction portion 30C (the portion further upstream than the heat exchange portion 15A) which projects further upstream than the outer pipe 36 (the engine cooling water flow path 38) in the partition wall pipe 30 is connected to an outer peripheral surface of the upstream end 32A of the inner pipe 32 in an airtight fashion. Furthermore, the exhaust gas exhaust portion 30D (the portion further downstream than the heat exchange portion 15A) of the partition wall pipe 30 which projects further downstream than the outer pipe 36 (the engine cooling water flow path 38) in the partition wall pipe 30 is connected to the exhaust gas guide pipe 42 via an end pipe 44 in an airtight fashion.

In addition, through-holes 46, which establish a communication between the bypass flow path 40 which is the space inside the inner pipe 32 and the exhaust gas flow path 34 of the exhaust system heat exchanger 15, are provided in a portion of the inner pipe 32 which lies inside the exhaust gas introduction portion 30C of the partition wall pipe 30. Namely, the through-holes 46 makes up a diverging portion between the exhaust gas flow path 34 and the bypass flow path 40. On the other hand, through-holes 48, which establish a communication between the inside and outside of the exhaust gas flow path 34, are provided in the end pipe 44. The through-holes 48 and a downstream side opening end 42B of the exhaust gas guide pipe 42 are both made to open to an exhaust gas exit header 52 which is a space within a heat exchanger rear portion shell 50, as a shell, of which an upstream side opening end 50A is airtightly connected to the end pipe 44.

Consequently, in the exhaust system heat exchanger 15, exhaust gases which have bypassed the heat exchange portion 15A and passed through the bypass flow path 40 reaches the exhaust gas exit header 52 within the heat exchanger rear portion shell 50 by way of the inside of the exhaust gas guide pipe 42, while exhaust gases which have passed through the exhaust gas flow path 34 by way of the through-holes 46 reaches the exhaust gas exit header 52 within the heat exchanger rear portion shell 50 by way of the outside of the exhaust gas guide pipe 42 and the through-holes 48.

Furthermore, the exhaust system heat exchanger 15 includes a valve device 54 for opening and closing the downstream side opening end 42B of the exhaust gas guide pipe 42. The valve device 54 includes a valve 58 which can take a closed position (refer to solid lines in Fig. 4) in which the valve 58 rotates around a rotational shaft 56 which is supported by the heat exchanger rear portion shell 50 so as to close the downstream side opening end 42B of the exhaust gas guide pipe 42 and an open position (refer to imaginary lines in Fig. 4) in which the valve 58 rotates in a direction indicated by an arrow A from the closed position to open the downstream side opening end 42B of the exhaust gas guide pipe 42. The valve 58 is configured to be brought into abutment with a valve seat (a seal) 60 provided around the downstream side opening end 42B of the exhaust gas guide pipe 42 when the valve 58 is positioned in the closed position.

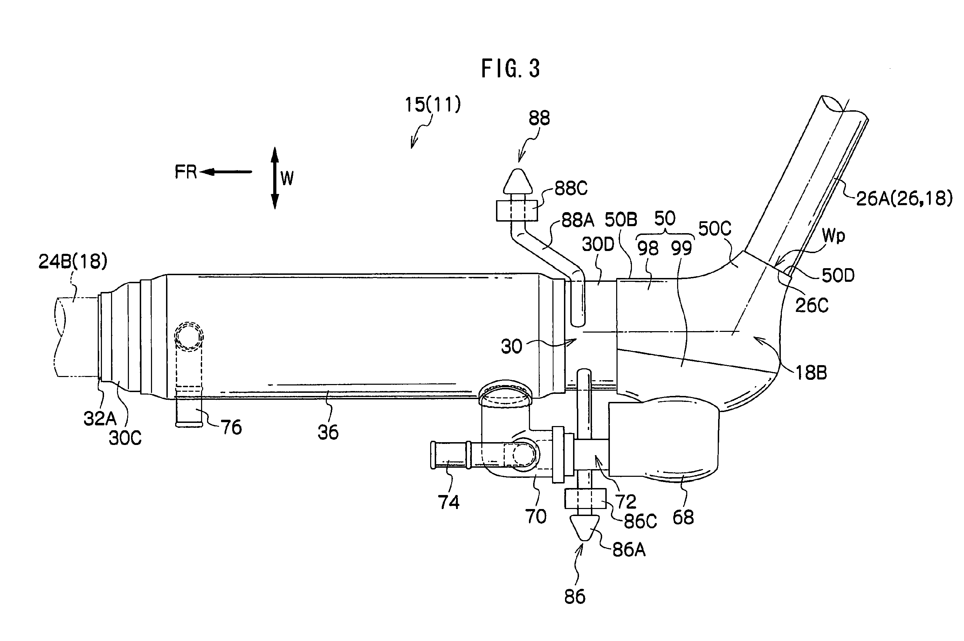

The rotational shaft 56, which is made long in the vehicle width direction, is supported on a frame 62 fixed to the exhaust gas guide pipe 42 in such a manner as to rotate relative to the heat exchanger rear portion shell 50. The valve 58 is connected to the rotational shaft 56 via an arm 64 in such a manner as to rotate together with the rotational shaft 56, whereby the valve 58 is allowed to rotate around the rotational shaft 56 to thereby take the aforesaid closed position and open position. In addition, a return spring 66, which functions as a biasing member for generating biasing force to displace the valve 58 to the closed position, is provided on an end portion of the rotational shaft 56 which projects outwards of the heat exchanger rear portion shell 50. As is shown in Fig. 3, the end portion of the rotational shaft 56 and the return spring 66 are covered with a heat insulation cover 68.

In the exhaust system heat exchanger 15 having the valve device 54 that has been described heretofore, in the event that the pressure of exhaust gases is low, the valve 58 closes the exhaust gas guide pipe 42, that is, the bypass flow path 40 by virtue of the biasing force of the return spring 66, so that exhaust gases are allowed to flow through the exhaust gas flow path 34 of the heat exchange portion 15A. On the other hand, when the pressure of exhaust gases reaches or exceeds a predetermined value, the valve 58 is designed to take an open position according to the pressure of exhaust gases against the biasing force of the return spring 66. In this embodiment, the valve 58 is set to take an open position (refer to the imaginary lines in Fig. 4), in which the opening of the valve by virtue of the pressure of exhaust gases becomes maximum, by virtue of the pressure of exhaust gases at which a maximum output of the engine 20 is generated.

In addition, in this embodiment, the valve device 54 is made to force the valve 58 to be held in the open position irrespective of the pressure of exhaust gases in the event that the temperature of engine cooling water which exchanges heat with exhaust gases reaches or exceeds a predetermined temperature. Specifically, as is shown in Fig. 3, a first cooling water inlet pipe 70, which communicates with the engine cooling water flow path 38 in an interior thereof, is connected to a downstream side of the outer pipe 36 in the exhaust gas flow direction. A thermoactuator 72, whose operation end is provided inside the heat insulation cover 68, is provided at an end portion of the first cooling water inlet pipe 70. The thermoactuator 72 is configured to rotate the rotational shaft 56 against the biasing force of the return spring 66 by virtue of thermal expansion of wax filled in the interior thereof. In this embodiment, the thermoactuator 72 is made to cause, via the rotational shaft 56, the valve 58 to take a full open position whose opening is larger than that of the open position realized by virtue of the pressure of exhaust gases (to cause the valve 58 to maintain the full open position) in the event that the engine cooling water temperature is equal to or higher than 80°C. As is indicated by long-dashed short-dashed lines in Fig. 4, the full open position is a position resulting when the valve 58 rotates about 90° in the direction indicated by the arrow A from the closed position.

As is shown in Fig. 3, a second cooling water inlet pipe 74 is connected to an intermediate portion of the first cooling water inlet pipe 70 for introducing engine cooling water into the engine cooling water flow path 38 of the exhaust system heat exchanger 15 by way of the first cooling water inlet pipe 70. On the other hand, a cooling water outlet pipe 76 is connected to an upstream side of the outer pipe 36 in the exhaust gas flow direction for discharging engine cooling water from the engine cooling water flow path 38. The cooling water outlet pipe 76 communicates with a substantially vertical apex portion (a highest portion) of the outer pipe 36, while the second cooling water inlet pipe 74 communicates with a portion which constitutes a highest portion of the first cooling water inlet pipe 70 which communicates with the outer pipe 36 in a position which is slightly lower than a vertical apex portion thereof and a portion which is higher than the highest portion of the outer pipe 36. The second cooling water inlet pipe 74 and the cooling water outlet pipe 76 are connected to a cooling water circulation path which includes the engine 20, a radiator and a heater core in such a manner as to become in series with the engine 20 at least along the flow of engine cooling water.

Thus, the exhaust system heat exchanger 15 is made to be a counter flow heat exchanger in which the flow of exhaust gases is opposite to the flow of engine cooling water, and in this embodiment, due to a spiral flow of exhaust gases along the spiral groove 30A being produced and a spiral flow of engine cooling water along the spiral groove 30B which is opposite to the flow of exhaust gases being produced, the exhaust system heat exchanger 15 is configured into an exhaust system heat exchanger which is compact in size and which provides a high heat exchange efficiency. In addition, in the exhaust system heat exchanger 15, the pressure loss (back pressure) in exhaust gases due to the passage through the bypass flow path 40 is sufficiently small relative to the pressure loss in exhaust gases due to the passage through the exhaust gas flow path 34, and exhaust gases are made to flow mainly through the bypass flow path 40 when the valve 58 takes the open position.

### (Vehicle Exhaust System Structure)

As is shown in Fig. 1, in the vehicle exhaust system structure 10, the first catalytic converter 12, the inter-catalytic converter exhaust pipe 22, the second catalytic converter 14, the catalytic converter to heat exchanger exhaust pipe 24 and the exhaust system heat exchanger 15 are disposed substantially in a straight line along the vehicle front-rear direction when seen in plan view. In addition, as is shown in Fig. 2, in the side view, the first catalytic converter 12 is disposed along the vehicle vertical direction, and the second catalytic converter 14 and the exhaust system heat exchanger 15 are both disposed slightly inclined relative to a horizontal direction.

In addition, as is shown in Fig. 1, the first catalytic converter 12, the inter-catalytic converter exhaust pipe 22, the second catalytic converter 14, the catalytic converter to heat exchanger exhaust pipe 24 and the exhaust system heat exchanger 15, which are disposed substantially in the straight line when seen in plan view as has been described above, are disposed substantially in a central portion in the vehicle width direction. In addition, the exhaust system heat exchanger 15 is disposed within a tunnel portion T (in Fig. 1, a portion held between a pair of left and right tunnel side reinforcements 82) which is formed in a floor of the vehicle body B, so as to be protected from the interference with road surface and flying gravels.

On the other hand, as is shown in Fig. 1, the muffler 16 is disposed to be offset relative to the exhaust system heat exchanger 15 in the vehicle width direction. In this embodiment, the muffler 16 is disposed in parallel with a fuel tank 84 in the vehicle width direction. Because of this, the heat exchanger to muffler exhaust pipe 26 is made to constitute at its central portion (its main part) an inclined portion 26A which extends in a direction intersecting the vehicle front-rear direction (which is inclined relative to the vehicle front-rear direction) when seen in plan view. A rear end side of the heat exchanger to muffler exhaust pipe 26 is made to constitute a straight portion 26B which extends substantially along the vehicle front-rear direction, and the straight portion 26B is, as has been described above, fixed to the muffler inlet pipe 16A of the muffler 16. Consequently, the vehicle exhaust system structure 10 can be understood as a configuration in which the inclined portion 26A is provided in the heat exchanger to muffler exhaust pipe 26 in order to dispose the exhaust system 11 or the muffler 16 in such a manner as to go round the fuel tank 84.

In addition, in the vehicle exhaust system structure 10, the first catalytic converter 12 is coupled directly to the exhaust manifold 20A of the engine 20 as has been described above, and a rear part of the exhaust system 11 which includes the exhaust system heat exchanger 15 is supported on the vehicle body B by a suspension unit 80. In this embodiment, in the exhaust system 11, the exhaust system heat exchanger 15 is supported on the vehicle body B by two support portions 86, 88 which both function as heat recovery unit suspending portions, the muffler 16 is supported on the vehicle body B by a support portion 90, and the downstream side exhaust pipe 28 is supported on the vehicle body B by a support portion 92. Specific description will be given below.

As is shown in Fig. 3, supported rods 86A, 88A, which function as supported members which project in opposite directions to each other in such a manner as to be substantially at right angles to the longitudinal direction of the exhaust system heat exchanger 15 when seen in plan view, are fixed to the exhaust gas exhaust portion 30D which is an exposed portion to the outside of the partition wall pipe 30 which makes up the exhaust system heat exchanger 15. As is shown in Fig. 4, the exhaust gas exhaust portion 30D of the partition wall pipe 30 is made to constitute a single-sheeted portion which is exposed between the outer pipe 36 in an outer shell of the exhaust system heat exchanger 15 and the end pipe 44. Namely, the supported rods 86A, 88A, which make up the two support portions 86, 88, are both fixed to a low-rigidity portion (a least rigid location) of the exhaust system heat exchanger 15.

As is shown in Fig. 1, the support portion 86 suspends (supports in a suspending fashion) the exhaust system heat exchanger 15, which constitutes the component of largest mass in the exhaust system 11, from the vehicle body B by causing a distal end portion of the supported rod 86A to be inserted into a support rubber 86C into which a support rod 86B fixed to the vehicle body B is inserted in such a manner as to enable a longitudinal relative displacement (absorption of thermal elongation). Similarly, the support portion 88 suspends the exhaust system heat exchanger 15, which constitutes the component of largest mass in the exhaust system 11, from the vehicle body B by causing a distal end portion of the supported rod 88A to be inserted into a support rubber 88C into which a support rod 88B fixed to the vehicle body B is inserted in such a manner as to enable a longitudinal relative displacement. In this embodiment, the support rods 86B, 88B are fixed to a body cross member 94 which straddles between the left and right tunnel side reinforcements 82.

The support portion 90 has a supported rod 90A which is fixed to a rear end 16D of a muffler shell 16C which makes up the muffler 16 and which projects outwards in the vehicle width direction. The supported rod 90A suspends (supports in a suspending fashion) the muffler 16, which constitutes the component of relatively large mass in the exhaust system 11, from the vehicle body B by being inserted into a support rubber 90C into which a support rod 90B fixed to the vehicle body B is inserted in such a manner as to enable a longitudinal relative displacement (absorption of thermal elongation). In addition, the support portion 92 has a supported rod 92A which is fixed to a position on the downstream side exhaust pipe 28 which lies in the vicinity of the atmosphere release portion 18A and which projects outwards in the vehicle width direction. The supported rod 92A suspends (supports in a suspending fashion) the downstream side exhaust pipe 28, which makes up the exhaust pipe 18, from the vehicle body B by being inserted into a support rubber 92C into which a support rod 92B fixed to the vehicle body B is inserted in such a manner as to enable a longitudinal relative displacement (absorption of thermal elongation).

Although the illustration is omitted, a configuration is adopted in which the center of gravity of the exhaust system 11 is situated inside an imaginary quadrangle which is formed by the four support portions 86, 88, 90, 92 (the support rubbers 86C, 88C, 90C, 92C). In addition, in this embodiment, a configuration is adopted in which the center of gravity of a portion of the exhaust system 11 which lies further downstream side than a ball joint 96 (which will be described later) of the inter-catalytic converter exhaust pipe 22 is situated inside the aforesaid imaginary quadrangle.

In addition, the vehicle exhaust system structure 10 includes ball joints 96, which function as vibration cut-off mechanisms, which prevent the transmission of vibration of the engine 20 (roll around an axis which is parallel to the crankshaft 20B) to the rear part of the exhaust system 11 which includes the exhaust system heat exchanger 15. In this embodiment, ball joints 96 are provided, respectively, on the inter-catalytic converter exhaust pipe 22 and the catalytic converter to heat exchanger exhaust pipe 24, and are configured to permit a relative displacement between a front portion 22A and a rear portion 22B of the inter-catalytic converter exhaust pipe 22 and a relative displacement between a front portion 24A and a rear portion 24B of the catalytic converter to heat exchanger exhaust pipe 24.

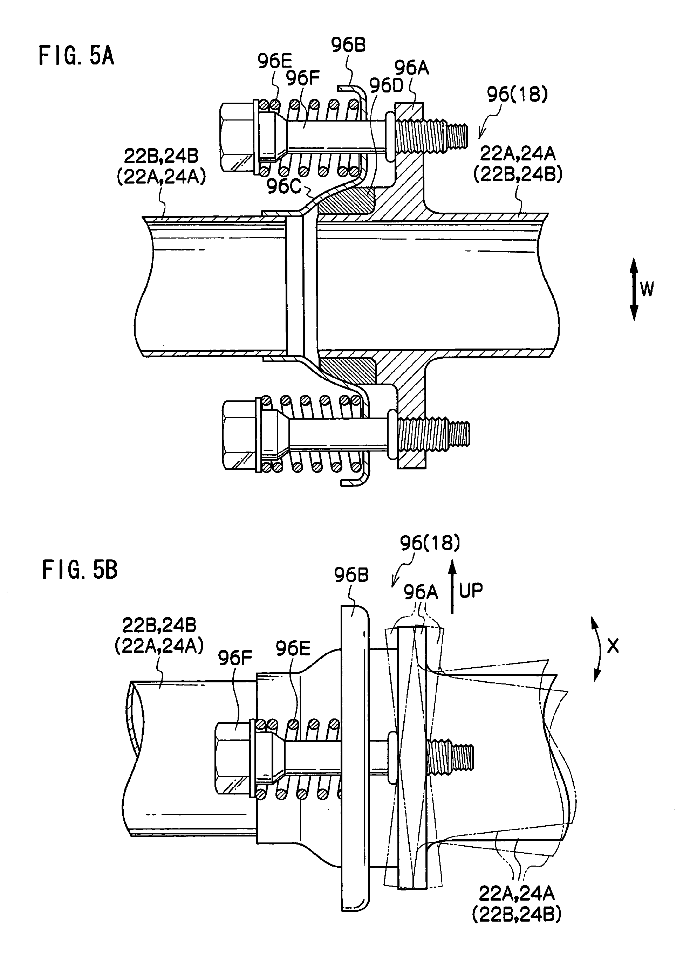

More specifically, as is shown in Fig. 5A, in the ball joints 96, gaskets 96D have spherical portions adapted to be brought into slidable contact with the surfaces of spherical portions 96C of second flanges 96B, which are provided on the rear portions 22B and 24B of the inter-catalytic converter exhaust pipe 22 and the catalytic converter to heat exchanger exhaust pipe 24. Gaskets 96D are disposed to be held between first flanges 96A, which are provided on the front portions 22A and 24A of the inter-catalytic converter exhaust pipe 22 and the catalytic converter to heat exchanger exhaust pipe 24, and the second flanges 96B. As a result, the front portions 22A and 24A of the inter-catalytic converter exhaust pipe 22 and the catalytic converter to heat exchanger exhaust pipe 24, and the rear portions 22B and 24B of the inter-catalytic converter exhaust pipe 22 and the catalytic converter to heat exchanger exhaust pipe 24, are coupled in such a manner as to enable a relative angle displacement around the center of the spherical portions 96C.

In addition, in the ball joint 96, the first flange 96A and the second flange 96B are fastened together via springs 96E by bolts 96F. As is shown in Fig. 5A, pairs of springs 96E and bolts 96F are provided in such a manner as to hold therebetween the inter-catalytic converter exhaust pipe 22 and the catalytic converter to heat exchanger exhaust pipe 24 in the vehicle width direction, whereby the ball joints 96 are constructed to couple together the front portions 22A, 24A of the inter-catalytic converter exhaust pipe 22 and the catalytic converter to heat exchanger exhaust pipe 24 and the rear portions 22B, 24B of the inter-catalytic converter exhaust pipe 22 and the catalytic converter to heat exchanger exhaust pipe 24 in such a manner to allow a relative angle displacement in vehicle vertical directions (refer to an arrow X in Fig. 5B).

Furthermore, as is shown in Fig. 3, in the vehicle exhaust system structure 10, the heat exchanger rear portion shell 50, which makes up the exhaust system heat exchanger 15, has a projecting portion 50C which projects further in a direction in which the inclined portion 26A of the heat exchanger to muffler exhaust pipe 26 extends than an end surface 50B thereof in the vehicle width direction and is joined to an upstream end 26C of the heat exchanger to muffler exhaust pipe 26 (the inclined portion 26A) at a projecting end 50D of the projecting portion 50C through welding. Namely, a welded joint Wp between the projecting end 50D and the upstream end 26C lies offset in the vehicle width direction relative to the straight line formed by the first catalytic converter 12, the inter-catalytic converter exhaust pipe 22, the second catalytic converter 14, the catalytic converter to heat exchanger exhaust pipe 24 and the exhaust system heat exchanger 15 when seen in plan view. In addition, in the vehicle exhaust system structure 10, the heat exchanger rear portion shell 50 which makes up the exhaust system heat exchanger 15 makes up the bend portion 18B of the exhaust pipe 18 together with the inclined portion 26A of the heat exchanger to muffler exhaust pipe 26.

In order to form this projecting portion 50C, the heat exchanger rear portion shell 50 is made up by joining together a half body 98 which constitutes one side in the vehicle width direction and a half body 99 which constitutes the other side, and the projecting portion 50C is formed integrally on the half body 98 through, for example, drawing. Consequently, the projecting portion 50C is formed substantially into a cone shape in which the cross-sectional area of its flow path is gradually reduced towards the projecting end 50D which has substantially the same diameter as that of the heat exchanger to muffler exhaust pipe 26.

Next, the operation of the embodiment will be described.

In the exhaust system 11 to which the vehicle exhaust system structure 10 of the aforementioned configuration is applied, exhaust gases produced in association with the running of the engine 20 are purified, made silent, and released into the atmosphere via the first catalytic converter 12, the second catalytic converter 14, the exhaust system heat exchanger 15 and the muffler 16 which are made to communicate with each other through the exhaust pipe 18. In addition, in the exhaust system heat exchanger 15, if the temperature of engine cooling water is low, the valve 58 is made free relative to the thermoactuator 72, whereby the valve device 54 functions as a self-pressurizing valve. Because of this, under running conditions of low exhaust gas pressure, the exhaust gas guide pipe 42, that is, the bypass flow path 40, is closed by virtue of the biasing force of the return spring 66, and exhaust gases are made to flow through the exhaust gas flow path 34 in the heat exchange portion 15A, so as to implement a heat exchange with the engine cooling water which is flowing through the engine cooling water flow path 38. Thereby, warming up of the engine 20 can be promoted, and heating can be maintained, when starting a vehicle in low-temperature conditions.

For example, in a running condition in which the output of the engine 20 is increased for acceleration or climbing, when the pressure of exhaust gases is increased, the valve 58 which receives the pressure of the exhaust gases rotates in the direction indicated by the arrow A against the biasing force of the return spring 66 to reach the open position, whereby exhaust gases flow mainly through the bypass flow path 40, and the back pressure is reduced compared with the case in which exhaust gases flow through the exhaust gas flow path 34. Namely, in the vehicle exhaust system structure 10 which includes the valve device 54 which functions as the self-pressurizing valve, when the reduction in back pressure to secure the output of the engine 20 takes priority over the recovery of exhaust heat to warm up or the like the engine 20, exhaust gases bypass the heat exchange portion 15A to flow through the bypass flow path 40, whereby the back pressure is reduced automatically. In addition, when the engine 20 produces its maximum output, the valve 58 is caused to take the open position which is indicated by the imaginary lines in Fig. 4 by the pressure of exhaust gases (is opened to its maximum opening by the pressure of exhaust gases).

In addition, in the vehicle exhaust system structure 10, when the temperature of engine cooling water reaches or exceeds 80°C, the thermoactuator 72 imparts a torque which can resist the biasing force of the return spring 66 to the rotational shaft 56, so as to hold the valve 58 in the full open position, whereby exhaust gases are caused to flow mainly through the bypass flow path 40 and are then discharged from the exhaust pipe 18 by way of the exhaust gas guide pipe 42 and the exhaust gas exit header 52 of the heat exchanger rear portion shell 50. Namely, in the running condition in which the recovery of exhaust heat is not necessary, the exhaust gas flow path is automatically switched to the bypass flow path 40.

Incidentally, in the engine 20 which is transversely installed in the front part of the vehicle body B, rolling vibration (refer to an arrow R in Fig. 2) around an axis parallel to the crankshaft 20B is generated, and vibration like this tends to generate twist or bend in the inclined portion 26A of the heat exchanger to muffler exhaust pipe 26 which makes up the bend portion 18B of the exhaust pipe 18, the welded joint Wp which is the joint portion between the inclined portion 26A and the heat exchanger rear portion shell 50, or the like.

Here, in the vehicle exhaust system structure 10, since the ball joint 96 is provided in the catalytic converter to heat exchanger exhaust pipe 24, the transmission of rolling vibration of the engine 20 to the inclined portion 26A of the heat exchanger to muffler exhaust pipe 26 is prevented. In particular, since the ball joint 96 is made to permit the relative displacement in the vehicle vertical direction between the front portion 24A and the rear portion 24B of the catalytic converter to heat exchanger exhaust pipe 24 and the first catalytic converter 12, the inter-catalytic converter exhaust pipe 22, the second catalytic converter 14, the catalytic converter to heat exchanger exhaust pipe 24 and the exhaust system heat exchanger 15, which constitute a vibration transmission path from the engine 20, are disposed substantially in the straight line when seen in plan view, the transmission of rolling vibration of the engine 20 to the heat exchanger to muffler exhaust pipe 26 side is suppressed effectively.

Namely, in the vehicle exhaust system structure 10, the first catalytic converter 12, the inter-catalytic converter exhaust pipe 22, the second catalytic converter 14, the catalytic converter to heat exchanger exhaust pipe 24 and the exhaust system heat exchanger 15 are disposed in a straight line along the vehicle front-rear direction when seen in plan view, and since load or forced displacement associated with the rolling vibration of the engine 20 acts mainly along a plane orthogonal to the vehicle width direction (a vehicle width direction component is small), the load or forced displacement can effectively be cut off (absorbed) by the ball joint 96.

In addition, in the vehicle exhaust system structure 10, by providing the ball joint 96 on the catalytic converter to heat exchanger exhaust pipe 24, a distance between the ball joint 96 and the frontmost support portions 86, 88 in the suspension unit 80 which support the exhaust system 11 is set to be short. Because of this, the ball joint 96 can be installed with good accuracy in a neutral position, thereby making it possible to exhibit well the vibration cut-off effect by the ball joint 96.

Furthermore, in the vehicle exhaust system structure 10, by providing the ball joint on the catalytic converter to heat exchanger exhaust pipe 24, the length of the exhaust system 11 that is supported on the vehicle body B by the suspension system 80 (the vibration system made up by the exhaust system 11) can be made short in appearance. Specifically, since the portion (downstream side) of the exhaust system 11 which lies further rearwards in the vehicle front-rear direction than the ball joint 96 (the second flange 96B) provided on the catalytic converter to heat exchanger exhaust pipe 24 can be understood as the vibration system which is independent from the front-side portion of the exhaust system 11, the resonance frequency of the vibration system that is supported by the suspension system 80 of the exhaust system 11 becomes high, whereby the strengths against rolling resonance of the engine 20 of the inclined portion 26A of the catalytic converter to muffler exhaust pipe 26 which makes up the bend portion 18B of the exhaust system 11 and the welded joint Wp which is the joint portion between the inclined portion 26A and the heat exchanger rear portion shell 50 are increased.

On the other hand, in the vehicle exhaust system structure 10, since the ball joint 96 is also provided on the inter-catalytic converter exhaust pipe 22, the transmission of rolling vibration of the engine 20 to the heat exchanger to muffler exhaust pipe 26 side is suppressed more effectively. Namely, in case the second ball joint 96 is provided on the heat exchanger to muffler exhaust pipe 26 or the downstream side exhaust pipe 28, the ball joint 96 is disposed between the support portions 86, 88 and the support portion 90 or between the support portion 90 and the support portion 92, that is, between the portions restrained by the suspension unit 80, and this causes a fear that the action of the ball joint 96 is interrupted. In contrast to this, in the vehicle exhaust system structure 10, since the ball joint 96 is disposed on the inter-catalytic converter exhaust pipe 22, in other words, since the two ball joints 96 are disposed between the first catalytic converter 12 which is restrained by the engine 20 and the frontmost support portions 86, 88 of the suspension unit 80, both the two ball joints 96 are allowed to exhibit the required vibration cut-off effect.

In addition, since the ball joints 96 are provided both upstream and downstream of the second catalytic converter 14, the joint portion between the second catalytic converter 14 and the inter-catalytic converter exhaust pipe 22 is protected against the rolling vibration of the engine 20. In case a configuration is adopted in which no ball joint 96 is provided on the inter-catalytic converter exhaust pipe 22, since the first catalytic converter 12 to which an upstream end of the inter-catalytic converter exhaust pipe 22 is connected is fixed to the engine 20, there is caused a fear that vibration associated with the action of the ball joint 96 provided on the catalytic converter to heat exchanger exhaust pipe 24 applies high stress to the joint portion between the inter-catalytic converter exhaust pipe 22 and the second catalytic converter 14. In contrast to this, in the vehicle exhaust system structure 10, since the second catalytic converter 14 is supported (or made free) in such a manner as to be displaced relative to the front and rear restraining portions (the engine 20, the suspension unit 80) by providing the ball joint 96 on the inter-catalytic converter exhaust pipe 22, the joint portion between the inter-catalytic converter exhaust pipe 22 and the second catalytic converter 14 is protected.

Furthermore, in the vehicle exhaust system structure 10, since the frontmost support portions 86, 88, which make up the suspension unit 80, are fixed to the exhaust gas exhaust portion 30D of the partition wall pipe 30 which constitutes the low-rigidity portion of the exhaust system heat exchanger 15, the exhaust system heat exchanger 15 performs an oscillating action (around the exhaust gas exhaust portion 30D serving as a fulcrum) due to the elastic deformation of the exhaust gas exhaust portion 30D of the partition wall pipe 30 where the supported rods 86A, 88A are fixed in association with the vibration cut-off action of the ball joint 96. Because of this, the displacement of the downstream portion (the rear portion) of the exhaust system heat exchanger 15 in association with the vibration cut-off action of the ball joint 96 is suppressed, and the transmission of the displacement (vibration) to the heat exchanger to muffler exhaust pipe 26 is suppressed, whereby in particular, an input of twist of the inclined portion 26A of the heat exchanger to muffler exhaust pipe 26 is suppressed effectively.

Furthermore, in the vehicle exhaust system structure 10, since the heat exchanger rear portion shell 50, which makes up the exhaust system heat exchanger 15, makes up the bend portion 18B of the exhaust pipe 18 together with the inclined portion 26A of the heat exchanger to muffler exhaust pipe 26, the cross-sectional area of the bend portion 18B of the exhaust pipe 18 is larger at the heat exchanger rear portion shell 50 than the other portion (a straight-line portion of the exhaust pipe 18), and hence, is strong against bend and twist. Moreover, since the projecting portion 50C provided on the heat exchanger rear portion shell 50 gradually decreases its cross-sectional area towards the inclined portion 26A, a portion where the cross-section is changed drastically and hence stress is easily concentrated is not formed, whereby an excessively large stress is prevented from being applied to the bend portion 18B. Furthermore, since the projecting portion 50C projects further than the end surface 50B of the heat exchanger rear portion shell 50 in the vehicle width direction, in other words, since the welded joint Wp between the projecting end 50D of the projecting portion 50C and the upstream end 26C of the heat exchanger to muffler exhaust pipe 26 is spaced apart in the vehicle width direction from the rear end portion of the exhaust system heat exchanger 15 which constitutes a twist and/or bend input portion, stress that is applied to the welded joint Wp can be decreased.

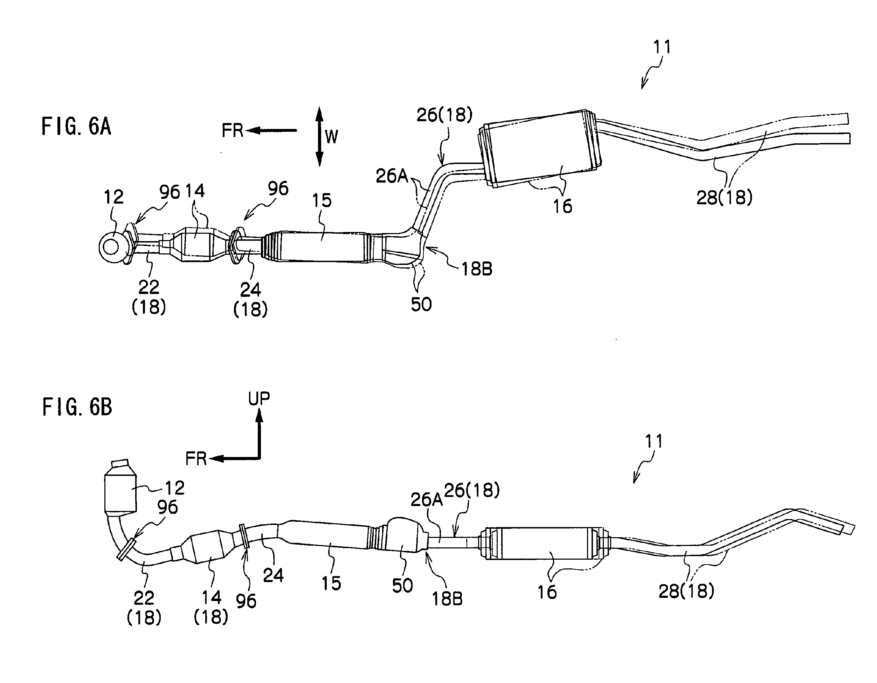

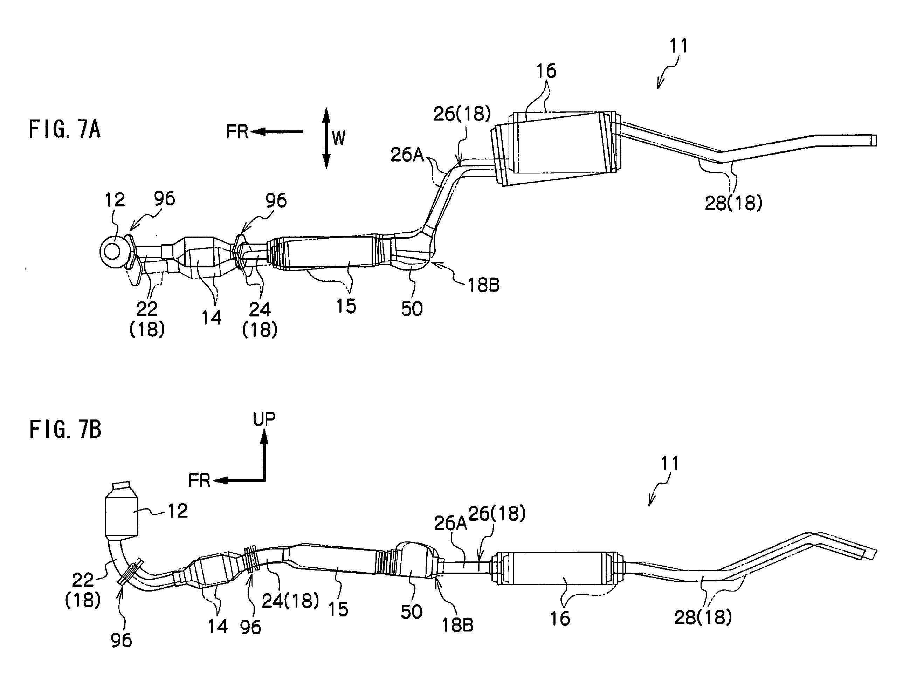

To describe this point more specifically, it has been confirmed through a numerical analysis that in the event that a vibration mode is generated, as is shown in Fig. 6A, for example, in which the ball joint 96 of the catalytic converter to heat exchanger exhaust pipe 24 is deviated in the vehicle width direction with a specific frequency, a deformation mode of the exhaust pipe 18 occurs as is also shown in Fig. 6B in which the heat exchanger to muffler exhaust pipe 26 is displaced in such a manner as to push the muffler 16 rearwards without imparting an excessively large bend to the bend portion 18B. In addition, it has been confirmed through a numerical analysis that in the event that a vibration mode is generated, as is shown in Fig. 7A, in which the ball joint 96 of the catalytic converter to heat exchanger exhaust pipe 24 is deviated obliquely rearwards with another specific frequency, a deformation mode of the exhaust pipe 18 occurs as is also shown in Fig. 7B in which the heat exchanger to muffler exhaust pipe 26 is displaced in such a manner as to push the muffler 16 rearwards without imparting an excessively large bend to the bend portion 18B. Namely, it has been confirmed analytically that by causing the heat exchanger rear portion shell 50 to make up at least part of the bend portion 18B in the exhaust system 11 to which the vehicle exhaust system structure 10 is applied, stress that would otherwise be applied to the bend portion 18B of the exhaust pipe 18 and the welded joint Wp can be suppressed.

As a result of the configuration that has been described heretofore, in a motor vehicle which includes the exhaust system 11 to which the vehicle exhaust system structure 10 is applied, the exhaust system 11 can be laid out while avoiding the interference of the fuel tank 84 with the configuration in which the exhaust heat exchanger 15 is disposed in a limited space underneath the vehicle body. In addition, the exhaust system 11 which includes the exhaust heat exchanger 15 of large mass can be supported on the vehicle body B by the suspension unit 80 with the small number of constituent components or at the small number of support points, and the bend portion 18B can be protected well by decreasing the stress applied to the bend portion 18B by the rolling of the engine 20, whereby by applying the vehicle exhaust system structure 10 to the exhaust system 11, the exhaust system 11 disposing the exhaust system heat exchanger 15 and avoiding the interference of the fuel tank 84 can be provided on, for example, a small front-engine front drive vehicle with a transverse engine.

Note that while in the aforesaid embodiment, the example is described in which the exhaust system 11 which includes the exhaust system heat exchanger 15 is supported on the vehicle body by the vehicle exhaust system structure 10, the invention is not limited thereto, and hence, the invention can also be applied to exhaust systems having various types of exhaust system heat exchangers.

In addition, while in the aforementioned embodiment, the example is described in which the ball joint 96 is provided on the inter-catalytic converter exhaust pipe 22, the invention is not limited thereto, and hence, for example, in a configuration in which the second catalytic converter 14 is supported on the engine 20 via a bracket or the like, the necessity of the ball joint 96 on the inter-catalytic converter exhaust pipe 22 can be obviated.

Furthermore, while in the embodiment above, the example is described in which the suspension unit 80 includes the four support portions 86, 88, 90, 92, the invention is not limited thereto, and hence, for example, the exhaust system 11 may be made to be supported by three support portions.

In addition, while in the embodiment above, the example is described in which the ball joint 96 is provided on the catalytic converter to heat exchanger exhaust pipe 24 and the supported rods 86A, 88A of the suspension unit 80 are fixed to the exhaust gas exhaust portion 30D of the partition wall pipe 30, the invention is not limited thereto, and hence, the invention may be configured to include only either of the aforesaid two characteristic configurations.

The invention provides a vehicle exhaust system structure which can protect well a bend portion of an exhaust pipe.

A first aspect of the present invention provides a vehicle exhaust system structure for discharging exhaust gases of an internal combustion engine, which is transversely installed in a front part of a vehicle body, from a rear part of the vehicle body, the vehicle exhaust system structure comprising: a first catalytic device, a second catalytic device, an exhaust heat recovery unit and a silencer which are disposed sequentially in that order from an upstream side in an exhaust gas flow direction; a first exhaust pipe which connects the second catalytic device to the exhaust heat recovery unit; a second exhaust pipe which includes a portion extending in a direction intersecting a vehicle front-rear direction, and which connects the exhaust heat recovery unit, which is disposed to be offset in a vehicle width direction, to the silencer; a suspension unit which suspends at least part of the exhaust system elements including the exhaust heat recovery unit, the second exhaust pipe, and the silencer, relative to the vehicle body, on a downstream side in an exhaust gas flow direction relative to the first exhaust pipe; and a vibration cut-off mechanism which is provided at the first exhaust pipe and permits a relative displacement between the second catalytic device and the exhaust heat recovery unit.

According to the above-described aspect, exhaust gases discharged from the internal combustion engine flow from the front part towards the rear part of the vehicle body through the first catalytic device, the second catalytic device, the exhaust heat recovery unit and the silencer in that order so as to be discharged to the atmosphere. Since the transversely installed internal combustion engine rolls around an axis along the vehicle width direction, a portion (a bend portion) of the second exhaust pipe of the exhaust system supported on the vehicle body by the suspension unit which extends in a direction intersecting a vehicle front-rear direction is subject to twist or bend (load or forced displacement), but the twist or bend is suppressed (absorbed) by the vibration cut-off mechanism. Here, the portion which is situated further upstream in the exhaust gas flow direction than the vibration cut-off mechanism can be understood as a portion (a vibration system) which is isolated from a supported portion on the vehicle body by the suspension unit. In addition, in the vehicle exhaust system structure, since the vibration cut-off mechanism is provided at the first exhaust pipe disposed between the second catalytic device and the exhaust heat recovery unit, the vibration system of the exhaust system which is supported on the vehicle body by the suspension unit is configured to be short (light), whereby the resonance frequency can be increased, thereby making it possible to increase the strength of the second exhaust pipe having the bend portion or the joint portion (the welded joint or the like) between the exhaust pipe and an exhaust system component against resonance attributed to the vibration of the internal combustion engine.

According to the above-described aspect, the bend portion of the exhaust pipe can be protected well.

In the above-described aspect, the first catalytic device, the second catalytic device, the first exhaust pipe and the exhaust heat recovery unit may be disposed linearly along a vehicle front-rear direction when seen in plan view, the vibration cut-off mechanism may be configured such that a front portion and a rear portion of the first exhaust pipe in the vehicle front-rear direction may be displaced relative to each other in a vehicle vertical direction.

According to the above-described aspect, in order to permit the relative displacement in the vehicle vertical direction between the front portion and rear portion of the first exhaust pipe, the vibration cut-off mechanism can suppress effectively the transmission of roll of the transverse internal combustion engine to the bend portion of the second exhaust pipe.

In the above-described aspect, the suspension unit may have a heat recovery unit suspending portion which suspends the exhaust heat recovery unit relative to the vehicle body, and which is at a position furthest upstream in an exhaust gas flow direction, and the heat recovery unit suspending portion may include a supported member which is fixed to a low-rigidity portion of the exhaust heat recovery unit.

According to the above-described aspect, the heat recovery unit suspending portion which includes the supported member which is fixed to the low-rigidity portion which is lower in rigidity (easier to be deformed) than the other portions of the exhaust heat recovery unit constitutes the suspending portion of the suspension unit which is at a position furthest upstream in the exhaust gas flow direction and is disposed closest to the vibration cut-off mechanism. Because of this, displacement generated in the vibration cut-off mechanism is absorbed by deformation in the low-rigidity portion of the exhaust heat recovery unit, whereby the transmission of load or forced displacement associated with the rolling of the internal combustion engine to the second exhaust pipe (the bend portion) which is situated further downstream in the exhaust gas flow direction than the exhaust heat recovery unit is suppressed, thereby the strength of the bend portion against resonance being increased further.

In the above-described aspect, a vibration cut-off mechanism which permits a relative displacement between the first catalytic device and the second catalytic device may further be provided.

According to the above-described aspect, at least two vibration cut-off mechanisms are disposed in such a manner as to hold therebetween the second catalytic device in the exhaust gas flow direction. Namely, at least two vibration cut-off mechanisms are disposed between the internal combustion engine and the bend portion of the second exhaust pipe, so that the transmission of load or forced displacement associated with the rolling of the internal combustion engine to the bend portion of the second exhaust pipe is suppressed, and the strength of the bend portion against the resonance is increased further. In addition, since the two vibration cut-off mechanisms are disposed further upstream in the exhaust gas flow direction than the position where the exhaust system is supported by the suspension unit, the interruption of vibration cut-off operations of the vibration cut-off mechanisms by the suspension unit is suppressed.

In the above-described aspect, a bend portion of the second exhaust pipe may be made up of a shell which is formed at one end of the exhaust heat recovery unit, and an inclined portion of the second exhaust pipe which extends in a direction intersecting the vehicle front-rear direction.

According to the above-described aspect, since the cross-sectional area of the bend portion of the second exhaust pipe is larger in the shell than that of the other portion (a straight-line portion of the exhaust pipe), the strength against bend or twist can be increased.

In the above-described aspect, the shell may include a projecting portion which projects in a direction in which the inclined portion extends, further than an end surface of the shell in a vehicle width direction.

According to the above-described aspect, since a welded joint between a projecting end of the projecting portion and an upstream end of the second exhaust pipe is spaced apart in the vehicle width direction from a rear end portion of the exhaust heat recovery unit which constitutes a portion where twist or bend is inputted, stress applied to the welded joint can be reduced.

A second aspect of the present invention provides a vehicle exhaust system structure for discharging exhaust gases of an internal combustion engine, which is transversely installed in a front part of a vehicle body, from a rear part of the vehicle body, the vehicle exhaust system structure comprising: a first catalytic device, a second catalytic device, an exhaust heat recovery unit and a silencer which are disposed sequentially in that order from an upstream side in an exhaust gas flow direction; an exhaust pipe which includes a portion extending in a direction intersecting a vehicle front-rear direction, and which connects the exhaust heat recovery unit, which is disposed to be offset in a vehicle width direction, to the silencer; a vibration cut-off mechanism which permits a relative displacement between the first catalytic device and the second catalytic device, or a relative displacement between the second catalytic device and the exhaust heat recovery unit; and a suspension unit which includes a supported member which is fixed to a low-rigidity portion of the exhaust heat recovery unit and a support member which supports the supported member on the vehicle body.

According to the above-described aspect, exhaust gases discharged from the internal combustion engine flow from the front part towards the rear part of the vehicle body through the first catalytic device, the second catalytic device, the exhaust heat recovery unit and the silencer in that order so as to be discharged to the atmosphere. Since the transversely installed internal combustion engine rolls around an axis along the vehicle width direction, a portion (a bend portion) of the exhaust pipe of the exhaust system supported on the vehicle body by the suspension unit which extends in a direction intersecting a vehicle front-rear direction is subject to twist or bend (load or forced displacement), but the twist or bend is suppressed (absorbed) by the vibration cut-off mechanism. Here, in the vehicle exhaust system structure, in the exhaust system including the exhaust heat recovery unit, since the supported member fixed to the low-rigidity portion of the exhaust heat recovery unit is supported on the vehicle body via the support member, displacement generated in the vibration cut-off mechanism is absorbed by the deformation of the low-rigidity portion of the exhaust heat recovery unit. Because of this, the transmission of load or forced displacement associated with the rolling of the internal combustion engine to the bend portion of the exhaust pipe which is situated further downstream in the exhaust gas flow direction than the exhaust heat recovery unit is suppressed, thereby making it possible to increase the strength of the exhaust pipe having the bend portion or the joint portion (the welded joint or the like) between the exhaust pipe and an exhaust system component against resonance attributed to the vibration of the internal combustion engine.

According to the above-described aspect, the bend portion of the exhaust pipe can be protected well.

In the above-described aspect, a bend portion of the exhaust pipe may be made up of a shell which is formed at one end of the exhaust heat recovery unit, and an inclined portion of the exhaust pipe which extends in a direction intersecting the vehicle front-rear direction.

According to the above-described aspect, since the cross-sectional area of the bend portion of the exhaust pipe is larger in the shell than that of the other portion (a straight-line portion of the exhaust pipe), the strength against bend or twist can be increased.

In the above-described aspect, the shell may include a projecting portion which projects in a direction in which the inclined portion extends, further than an end surface of the shell in a vehicle width direction.

According to the above-described aspect, since a welded joint between a projecting end of the projecting portion and an upstream end of the exhaust pipe is spaced apart in the vehicle width direction from a rear end portion of the exhaust heat recovery unit which constitutes a portion where twist or bend is inputted, stress applied to the welded joint can be reduced.

As has been described heretofore, the vehicle exhaust system structure according to the invention has an effect that the bend portion of the exhaust pipe can be protected well.

The foregoing description of the exemplary embodiment of the present invention has been provided for the purposes of illustration and description. It is not intended to be exhaustive or to limit the invention to the precise forms disclosed. Obviously, many modifications and variations will be apparent to practitioners skilled in the art. The exemplary embodiments were chosen and described in order to best explain the principles of the invention and its practical application, thereby enabling others skilled in the art to understand the invention for various embodiments and with the various modifications as are suited to the particular use contemplated. It is intended that the scope of the invention be defined by the following claims and their equivalents.

## Claims

1. A vehicle exhaust system structure for discharging exhaust gases of an internal combustion engine, which is transversely installed in a front part of a vehicle body, from a rear part of the vehicle body, the vehicle exhaust system structure comprising:
a first catalytic device, a second catalytic device, an exhaust heat recovery unit and a silencer which are disposed sequentially in that order from an upstream side in an exhaust gas flow direction;
a first exhaust pipe which connects the second catalytic device to the exhaust heat recovery unit;
a second exhaust pipe which includes a portion extending in a direction intersecting a vehicle front-rear direction and, which connects the exhaust heat recovery unit, which is disposed to be offset in a vehicle width direction, to the silencer;
a suspension unit which suspends at least part of the exhaust system elements including the exhaust heat recovery unit, the second exhaust pipe, and the silencer, relative to the vehicle body, on a downstream side in an exhaust gas flow direction relative to the first exhaust pipe; and
a vibration cut-off mechanism which is provided at the first exhaust pipe and permits a relative displacement between the second catalytic device and the exhaust heat recovery unit.

2. The vehicle exhaust system structure according to Claim 1, wherein
the first catalytic device, the second catalytic device, the first exhaust pipe and the exhaust heat recovery unit are disposed linearly along a vehicle front-rear direction when seen in plan view,
the vibration cut-off mechanism is configured such that a front portion and a rear portion of the first exhaust pipe in the vehicle front-rear direction may be displaced relative to each other in a vehicle vertical direction.

3. The vehicle exhaust system structure according to any one of Claims 1 or 2, wherein
the suspension unit has a heat recovery unit suspending portion which suspends the exhaust heat recovery unit relative to the vehicle body, and which is at a position furthest upstream in an exhaust gas flow direction, and wherein
the heat recovery unit suspending portion includes a supported member which is fixed to a low-rigidity portion of the exhaust heat recovery unit.

4. The vehicle exhaust system structure according to any one of Claims 1 to 3, further comprising:
a vibration cut-off mechanism which permits a relative displacement between the first catalytic device and the second catalytic device.

5. The vehicle exhaust system structure according to any one of Claims 1 to 4, wherein
a bend portion of the second exhaust pipe is made up of a shell which is formed at one end of the exhaust heat recovery unit, and an inclined portion of the second exhaust pipe which extends in a direction intersecting the vehicle front-rear direction.

6. The vehicle exhaust system structure according to Claim 5, wherein
the shell includes a projecting portion which projects in a direction in which the inclined portion extends, further than an end surface of the shell in a vehicle width direction.

7. A vehicle exhaust system structure for discharging exhaust gases of an internal combustion engine, which is transversely installed in a front part of a vehicle body, from a rear part of the vehicle body, the vehicle exhaust system structure comprising:
a first catalytic device, a second catalytic device, an exhaust heat recovery unit and a silencer which are disposed sequentially in that order from an upstream side in an exhaust gas flow direction;
an exhaust pipe which includes a portion extending in a direction intersecting a vehicle front-rear direction, and which connects the exhaust heat recovery unit, which is disposed to be offset in a vehicle width direction, to the silencer;
a vibration cut-off mechanism which permits a relative displacement between the first catalytic device and the second catalytic device, or a relative displacement between the second catalytic device and the exhaust heat recovery unit; and
a suspension unit which includes a supported member which is fixed to a low-rigidity portion of the exhaust heat recovery unit and a support member which supports the supported member on the vehicle body.

8. The vehicle exhaust system structure according to Claim 7, wherein
a bend portion of the exhaust pipe is made up of a shell which is formed at one end of the exhaust heat recovery unit, and an inclined portion of the exhaust pipe which extends in a direction intersecting the vehicle front-rear direction.

9. The vehicle exhaust system structure according to Claim 8, wherein
the shell includes a projecting portion which projects in a direction in which the inclined portion extends, further than an end surface of the shell in a vehicle width direction.
